# EUROPEAN PATENT APPLICATION

(11) **EP 4 625 013 A1**
(43) Date of publication of application: **01.10.2025**
(21) Application number: 23894539.8
(22) Date of filing: 20.11.2023
(51) Int. Cl.: G02B 6/36, G02B 6/40

(54) **FERRULE, OPTICAL CONNECTOR, AND METHOD FOR MANUFACTURING OPTICAL CONNECTOR**

(30) Priority: 22.11.2022 JP 2022186374
(71) Applicant: Hakusan, Inc., Kanazawa-shi, Ishikawa 920-8203 (JP)
(72) Inventor: KOBAYASHI, Moriaki, Kanazawa-city Ishikawa 9208203 (JP); UENO, Shohei, Kanazawa-city Ishikawa 9208203 (JP)
(74) Representative: Bryn Aarflot AS
(86) International application number: PCT/JP2023/041566
(87) International publication number: WO 2024/111531

(57) **Abstract**

[Problem] To provide: a ferrule that is compatible with high-speed large-capacity communication and that is less prone to damage even if repeatedly subjected to stress; an optical connector; and a method for manufacturing an optical connector.

[Solution]

A ferrule 10 for connecting a plurality of optical fibers, the ferrule including: fiber holes 100, each of which is provided on a connection end surface 11a for inserting an optical fiber; a boot insertion hole 300 which is provided on a rear end surface 11b for inserting a boot 60 into which a plurality of optical fibers can be inserted; an internal space 400 which provides communication between a plurality of the fiber holes 100 and the boot insertion hole 300; and a flange section 600 which is provided on a side of the rear end surface 11b and which protrudes from a surface adjacent to the rear end surface 11b, wherein a depth T of the boot insertion hole 300 is shorter than a length L of the flange section 600 in a connection direction.

## Description

### Technical Field

The present invention relates to a ferrule which optically connects optical fibers that transmit optical signals, an optical connector into which the ferrule is incorporated, and a method for manufacturing the optical connector.

### Background Art

Optical cables using optical fibers are widely used for home and industrial information communication due to their ability to communicate large amounts of information at high speed.

For example, Patent Literature 1 (Japanese Patent Laid-Open No. 2004-020962) discloses an optical connector in which resin for adhesion can be poured into an insertion hole of an optical fiber ribbon of a ferrule of the optical connector without generating bubbles when fixing the optical fiber ribbon to the ferrule.

The optical connector described in Patent Literature 1 includes: a tubular boot for protecting an optical fiber ribbon constituted of a plurality of coated optical fibers; and a ferrule including a boot insertion hole in which the boot is fixed, an optical fiber ribbon insertion hole which is provided in communication with the boot insertion hole, and a plurality of optical fiber holes for the plurality of optical fibers which are provided in communication with the optical fiber ribbon insertion hole, wherein the optical connector is formed by filling a resin for adhesion through a window hole provided at the top of the optical fiber ribbon insertion hole while the plurality of optical fibers are inserted into the optical fiber holes and the boot on which the optical fiber ribbon is mounted is inserted into the boot insertion hole, and an inclined portion is provided at an optical fiber ribbon storage part of the fiber ribbon insertion hole.

Patent Literature 2 (Japanese Patent Laid-Open No. 2009-23015) discloses an optical ferrule which can increase the number of optical fibers that can be wired without changing an external size of the optical ferrule.

The optical ferrule described in Patent Literature 2 uses, for example, an optical fiber with an outer diameter adjusted to 125 µm by coating a resin coating on an optical fiber with a cladding diameter of 100 µm or less. Optical fibers are inserted in a state of a thin bundle in a protective boot fitted into an optical fiber insertion opening of the optical ferrule and are curved inside the optical ferrule and led to respective optical fiber holes.

Patent Literature 3 (Japanese Patent Laid-Open No. 2021-101254) discloses an optical connector and a ferrule which allow the ferrule to be arranged in a predetermined position relative to a housing before the connector is connected while providing play between the ferrule and housing when the ferrule is retracted.

The optical connector described in Patent Literature 3 includes the ferrule which holds an end of an optical fiber and the housing which retractably accommodates the ferrule. A pair of upper inclined surfaces are formed on an upper surface of the ferrule and a pair of lower inclined surfaces are formed on a lower surface of the ferrule. The pair of upper inclined surfaces both face forward and upward and face opposite directions to each other in a width direction. The pair of lower inclined surfaces both face forward and downward and face opposite directions to each other in a width direction.

### Citation List

### Patent Literature

Patent Literature 1: Japanese Patent Laid-Open No. 2004-020962
Patent Literature 2: Japanese Patent Laid-Open No. 2009-23015
Patent Literature 3: Japanese Patent Laid-Open No. 2021-101254

### Summary of Invention

### Technical Problem

MT ferrules which allow optical fibers to communicate at high densities are generally connected using a predetermined optical connector such as an MPO connector. In this case, a connector spring is provided inside the optical connector, and an elastic force of the connector spring applies a strong pressing force to the MT ferrules in order to reduce connection loss.

In recent years, the number of optical fibers inserted into a single ferrule has been increasing due to the demand for high-speed, high-capacity information communication. As a result, the pressing force applied to the ferrule is also increased due to the need to provide a sufficient pressing force to each optical fiber. For example, in the case of MPO connectors designed for PC connection, a pressing force of 10 N or 20 N or more is applied to the MT ferrule.

Since a ferrule is a component that positions a connection end surface of an optical fiber, the ferrule is designed to be extremely precise in optical connectors and its accuracy is on the submicron level.

When an optical connector is connected, since two ferrules are precisely positioned by guide pins or the like, a pressing force of the connector spring is precisely applied to the connection end surfaces of the two ferrules.

On the other hand, when an optical connector is disconnected, one ferrule is to receive the pressing force of the coil spring by engaging with a connector housing. Therefore, a ferrule is subjected to a large mechanical load particularly during detachment and reattachment of an optical connector.

Conventionally, since optical cables were used to connect information and telecommunications devices that were separated by a distance, once optical cables were laid and optical connectors were connected, optical connectors were never detached and reattached unless there were exceptional circumstances such as an abnormality or re-laying of the cable.

However, in recent years, as information and telecommunications devices have become faster and denser, optical cables are increasingly being used not only for long-distance communications but also for wiring of various information processing devices. For example, in addition to being used for communication between servers or terminals in a same building, optical cables are being considered for use in communication between substrates in a server.

In such cases, optical connectors are to be detached and reattached more frequently than before and ferrules are to be subjected to a large mechanical load each time the ferrules are detached and reattached. As a result, ferrules are now subjected to loads at a frequency that was not expected in the past, causing the ferrules to break within optical connectors.

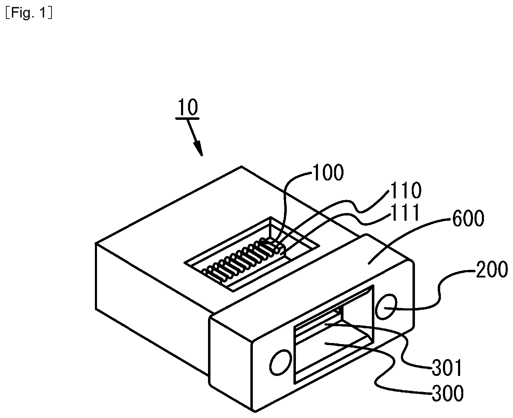

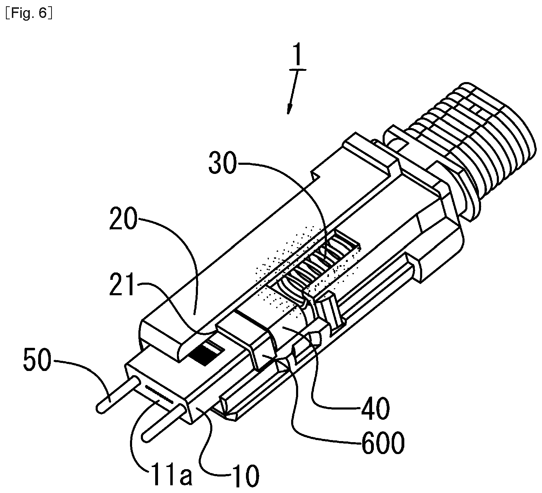

In the optical connector described in Patent Literature 1 above, a portion of the ferrule in the boot insertion hole has the shape of a flange and, as a result, the ferrule height at the boot insertion hole has increased (see Figures 1 and 6). In addition, due to the ferrule in the portion of the boot insertion hole having the shape of a flange, the ferrule is made thicker in the portion of the boot insertion hole to prevent the ferrule in this portion from cracking and breaking due to such cracking.

However, in general optical connectors such as MPO connectors, a ferrule is configured so that the ferrule does not slip forward from the connector by engaging the flange section of the ferrule with a convex portion of the connector housing. Therefore, when an optical connector is repeatedly detached and reattached, mechanical loads concentrate near the area between the flange section of a ferrule and a window portion, causing cracks and damaging the ferrule.

The optical ferrule according to Patent Literature 2 is intended to realize an optical ferrule with high density and excellent mechanical strength by using an optical fiber with a small outer diameter and configuring a special wiring structure inside the ferrule. However, in this case, since the size of the internal space forming the window portion and the wiring structure is large, even if the fiber is protected by the boot, the optical ferrule body will be damaged if the optical connector is repeatedly detached and reattached.

Since the optical connector according to Patent Literature 3 has an upper-side concave portion on the upper surface of the ferrule and an upper-side convex portion engages with the upper-side concave portion, the problem in that mechanical loads concentrate near the area between the flange section and the window portion as in standardized MPO connectors does not arise. However, in this case, the optical connector lacks versatility due to the need to use special ferrules and optical connectors, and the need to provide an upper-side concave portion in the ferrule body makes it difficult to achieve high density by providing optical fibers in a plurality of stages.

An object of the present invention is to provide a ferrule which is capable of accommodating high-speed, high-capacity communications and which is resistant to damage even when subjected to repeated stress, an optical connector, and a method for manufacturing an optical connector.

Another object of the present invention is to provide a ferrule which has excellent durability and which enables frequent detachment and reattachment of optical connectors, an optical connector, and a method for manufacturing an optical connector.

### Solution to Problem

(1) A ferrule according to one aspect is a ferrule for connecting a plurality of optical fibers, the ferrule including: fiber holes, each of which is provided on a connection end surface for inserting an optical fiber; a boot insertion hole which is provided on a rear end surface for inserting a boot into which a plurality of optical fibers can be inserted; an internal space which provides communication between a plurality of the fiber holes and the boot insertion hole; and a flange section which is provided on the rear end surface side and protrudes from a surface adjacent to the rear end surface, wherein a depth T of the boot insertion hole is shorter than a length L of the flange section in a connection direction.

When an optical connector is connected, a pressing force of a connector spring is applied to an entire connection end surface of a ferrule. On the other hand, when the optical connector is disconnected, a convex portion of a connector housing and the flange section of the ferrule engage with each other, thereby receiving the pressing force of the coil spring and preventing the ferrule from slipping forward.

Therefore, when an optical connector is detached or reattached and, particularly, when the optical connector is disconnected, the flange section of the ferrule and the convex portion of the connector housing collide subjecting the ferrule to a large impact stress. In addition, design accuracy of connectors is often lower than that of ferrules, and when the convex portion of the connector housing and the flange section of the ferrule are engaged, the ferrule may become subjected to deformation stress due to flatness and other effects as compared to when ferrules are in contact with each other at a connection end surface 11a.

Ferrules are usually made of a resin with excellent mechanical properties such as PPS (polyphenylene sulfide resin). However, with the recent increase in the density of optical communications, the pressing force exerted by the connector spring is required to be 10 N, 20 N or more and a large force is applied.

In addition, in recent years, with the diversification of optical communications, there is an increasing need to frequently detach and reattach optical connectors. However, repetitive stress applied to a ferrule by the increased number of times the ferrule is detached and reattached causes durability problems such as breakage of the ferrule in an optical connector.

In the ferrule according to the one aspect, since the length L of the flange section in a connection direction is longer than the depth T of the boot insertion hole, a wall thickness P on the front end portion side of the flange section and/or a wall thickness M on the flange section side of the internal space can be sufficiently secured to ensure strength to withstand the repeated stress on the ferrule caused by the detachment and reattachment of the optical connector. Furthermore, since the wall thickness near the front end portion of the flange section which is susceptible to loads when detaching and reattaching the optical connector is configured so as to be continuously thick, the stress received by the resin per unit area is reduced and fatigue from repeated stress can be minimized.

Therefore, even when the optical connector is frequently detached and reattached, a ferrule with superior durability which is not damaged can be realized.

(2)
A ferrule according to the second invention is the ferrule according to the first invention, wherein a reinforcing portion may be provided between a deepest portion of the boot insertion hole and a front end portion of the flange section.

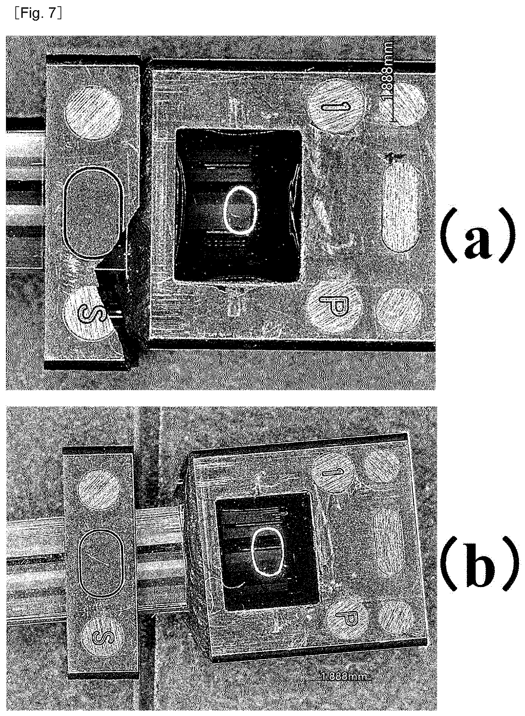

When an optical connector incorporating a ferrule is frequently detached and reattached, the ferrule becomes damaged within the optical connector. In this case, cracks generally start at a boundary portion (corner portion) between the flange section of the ferrule and the ferrule body and progress toward the boot insertion hole in the flange section, eventually causing the ferrule to be severed (refer to Figure 7). This is conceivably due to the fact that when the optical connector is disconnected, a large amount of stress is applied to the front end surface side of the flange section of the ferrule.

In consideration thereof, by providing a reinforcing portion with a predetermined wall thickness between the front end surface of the flange section and the bottom surface of the boot insertion hole, the crack-prone portion can be reinforced to provide strength to withstand the stresses associated with detachment and reattachment. Therefore, a ferrule resistant to breakage even when subjected to repetitive stress can be realized.

(3)
A ferrule according to the third invention is the ferrule according to any one of the first invention to the second invention, wherein the flange section may be formed so as to cover a perimeter of the boot insertion hole, guiding grooves for guiding the optical fibers may be formed on the rear end surface side of the fiber holes, and a bottom surface of a wall that defines the internal space may have a step between the rear end portion of the guiding grooves and the front end portion of the flange section.

Optical fibers have become thinner and thinner in recent years as they have become denser, and guiding grooves are needed to ensure that the optical fibers are inserted into the fiber holes. In addition, when fiber holes are to be provided in multiple stages, since guiding grooves need to be provided in multiple stages, a size of an adhesive filling window increases, which is disadvantageous in terms of ferrule strength.

Even in such cases, setting a predetermined distance Q between rear end portion of the guiding grooves and the front end portion of the flange section enables an internal space with a predetermined wall thickness M to be formed between the rear end portion of the adhesive filling window and the front end portion of the flange section. Therefore, a ferrule which has both high density connection and high strength and which is resistant to breakage even when subjected to repetitive stress can be realized.

(4)
A ferrule according to the fourth invention is the ferrule according to any one of the first invention to the third invention, wherein a wall thickness M of the internal space on the side of the front end surface of the flange section may be 0.8 times or more to 1.5 times or less of a wall thickness N of the boot insertion hole.

The internal space of the ferrule is filled with adhesive and a boot is inserted into the boot insertion hole. However, since strengths of the adhesive and the boot are lower than the strength of the ferrule body, repeated detachment and reattachment of the optical connector places a strain on a thin-walled portion of the ferrule body.

In particular, stress tends to concentrate between the wall forming the internal space and the wall forming the boot insertion hole as the optical connector is detached and reattached, and if there is a portion of the ferrule body with a particularly thin wall thickness, the portion will not be able to withstand the repeated stress.

In consideration thereof, by configuring both the wall thickness M of the internal space (on the front side of the front end surface of the flange section where the thickness becomes thinner) and the wall thickness N of the boot insertion hole to have a predetermined thickness range, the inner walls of the ferrule become continuous and integrated. Therefore, a ferrule resistant to breakage even when subjected to repetitive stress can be realized.

(5)
A ferrule according to the fifth invention is the ferrule according to any one of the first invention to the fourth invention, wherein corner edge portions of the inner wall forming the boot insertion hole and/or corner edge portions of the outer wall forming the flange section may be provided with a curvature.

Since the corner edge portions which are corners of the inner wall forming the boot insertion hole and the corner edge portions which are the corners of the outer wall forming the flange section are each portions where a component shape changes, stress is easily concentrated and a maximum stress is higher than in other portions.

In consideration thereof, concentration of maximum stress can be prevented by providing each corner edge portion with a curvature to relieve stress. Therefore, a ferrule resistant to breakage even when subjected to repetitive stress can be realized.

(6)
A ferrule according to the sixth invention is the ferrule according to any one of the first invention to the fifth invention, further including a pair of guide pin holes for inserting a pair of guide pins, wherein a distance between the guide pin holes and the boot insertion hole may be 0.1 mm or more to 0.2 mm or less.

With the recent trend toward higher speeds and larger capacities, ferrules are becoming more multi-fiber. However, when a large number of optical fibers are inserted into the ferrule, the sizes of the internal space and the boot insertion hole increase, resulting in a thinner inner wall of the ferrule.

In addition, since a pitch of the pair of guide pins is limited by standards, when a large number of optical fibers are arranged, the resin thickness between the guide pin insertion hole and the boot insertion hole tends to become thin, which may cause damage in this portion.

Therefore, since providing a predetermined distance between the guide pin hole and the boot insertion hole enables thickness to be secured even at high density, the ferrule can be made less prone to breakage even when repeatedly stressed.

(7)
An optical connector according to another aspect is an optical connector in which the ferrule according to any one of the first invention to the sixth invention has been incorporated.

Accordingly, an optical connector which has excellent durability and which enables frequent detachment and reattachment of the optical connector can be achieved.

(8)
A method for manufacturing an optical connector according to yet another aspect is a method for manufacturing an optical connector in which the ferrule according to any one of the first invention to the sixth invention has been incorporated, including the steps of: inserting each of a plurality of the optical fibers into the optical fiber insertion hole; inserting a boot for the optical fibers into the boot insertion hole; and assembling the ferrule into a connector housing.

Accordingly, an optical connector which has excellent durability and which enables frequent detachment and reattachment of the optical connector can be achieved.

### Brief Description of Drawings

[Figure 1] Figure 1 is a schematic perspective view of a ferrule according to a first embodiment.
[Figure 2] Figure 2 is a schematic sectional view of the ferrule according to the first embodiment.
[Figure 3] Figure 3(a) is a schematic front view, Figure 3(b) is a schematic top view, Figure 3(d) is a schematic left side view as viewed from a left side, Figure 3(c) is a schematic bottom view, and Figure 3(e) is a schematic right side view as viewed from a right side of the ferrule according to the first embodiment.
[Figure 4] Figure 4 shows the ferrule according to the first embodiment into which a boot has been inserted, in which Figure 4(a) is a schematic sectional view and Figure 4(b) is a schematic left side view.
[Figure 5] Figure 5 is a schematic enlarged view of an optical connector according to the first embodiment shown in Figure 2.
[Figure 6] Figure 6 is a schematic perspective view for describing an internal structure of the optical connector.
[Figure 7] Figure 7 is a photograph obtained by photographing a result of a detachment/reattachment test performed using an ordinary MT ferrule.
[Figure 8] Figure 8 is a schematic sectional view of a ferrule according to a second embodiment.
[Figure 9] Figure 9(a) is a schematic front view, Figure 9(b) is a schematic top view, Figure 9(d) is a schematic left side view as viewed from a left side, Figure 9(c) is a schematic bottom view, and Figure 9(e) is a schematic right side view as viewed from a right side of the ferrule according to the second embodiment.
[Figure 10] Figure 10 is a schematic sectional view of a ferrule according to a conventional example.
[Figure 11] Figure 11(a) is a schematic front view, Figure 11(b) is a schematic top view, Figure 11(d) is a schematic left side view as viewed from a left side, Figure 11(c) is a schematic bottom view, and Figure 11(e) is a schematic right side view as viewed from a right side of a ferrule according to a third embodiment.
[Figure 12] Figure 12(a) is a sectional view taken along line a-a' in Figure 11(b) and Figure 12(b) is a sectional view taken along line b-b' in Figure 11(b).

### Description of Embodiments

Hereinafter, embodiments of the present invention will be described with reference to the drawings.

In the following description, same components are assigned the same reference signs. In addition, names and functions of such components are also the same. Therefore, detailed descriptions of such components will not be repeated.

### <First Embodiment>

### (Ferrule 10)

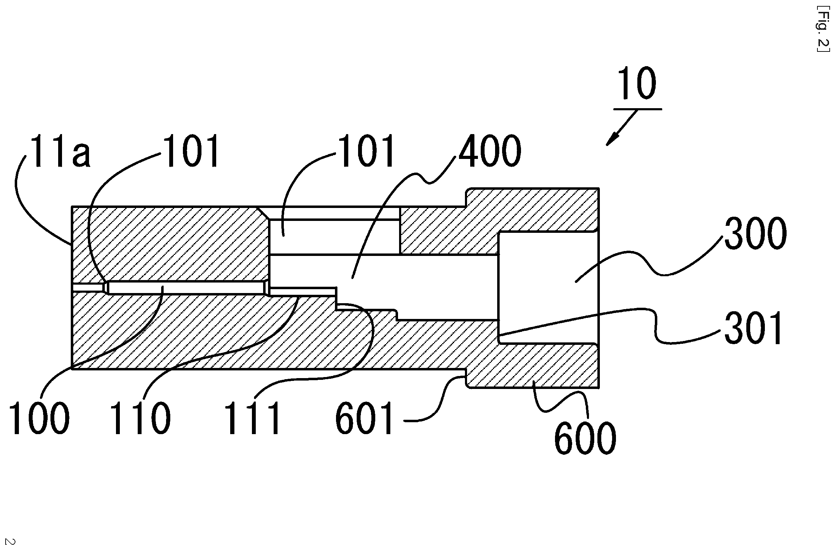

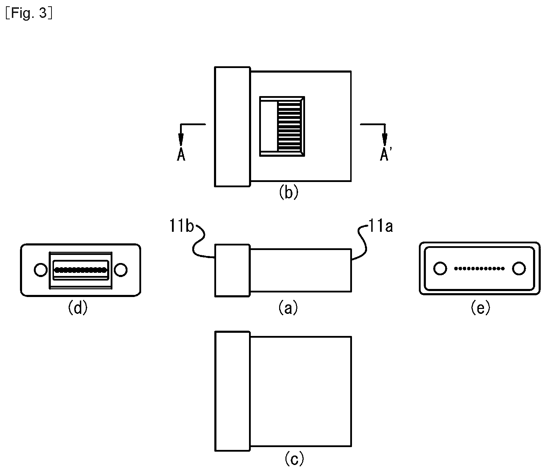

Figure 1 is a schematic perspective view showing a ferrule 10 according to a first embodiment. In addition, Figure 2 is a schematic sectional view of the ferrule 10 according to the first embodiment which is a sectional view taken along line A-A' in Figure 3(b). Figure 3(a) is a schematic front view, Figure 3(b) is a schematic top view, Figure 3(d) is a schematic left side view as viewed from a left side, Figure 3(c) is a schematic bottom view, and Figure 3(e) is a schematic right side view as viewed from a right side of the ferrule 10 according to the first embodiment.

As shown in Figures 1 to 3, the body of the ferrule 10 according to the present embodiment has a plurality of fiber holes 100 opening on a connection end surface 11a (body tip surface) for inserting and positioning an optical fiber (not illustrated) with its coating removed, and a plurality of semicircular, U-shaped or V-shaped guiding grooves 110 which communicate with rear ends of a plurality of fiber guiding holes and which are parallel to each other. The fiber holes 100 are constituted of the plurality of fiber guiding holes which communicate with rear ends of the plurality of fiber holes 100 and which are parallel to each other, and are provided therein with a reduced diameter portion 101.

The body of the ferrule 10 according to the present embodiment includes a boot insertion hole 300 for mounting a boot 60 for the ferrule into which an optical fiber is inserted, an adhesive filling window 500 for injecting an adhesive for fixing a plurality of optical fibers to the ferrule 10, and two guide holes 200 which are formed parallel to the plurality of fiber holes 100 and in a vicinity of both ends in a horizontal width direction and into which guide pins 50 are to be inserted.

The boot insertion hole 300 has an opening on a rear end surface 11b of the ferrule 10, and the adhesive filling window 500 has an opening on an upper surface of the ferrule 10. In addition, the body of the ferrule 10 has an internal space 400 which provides communication among the fiber holes 100, the boot insertion hole 300, and the adhesive filling window 500, and when the adhesive is filled through the adhesive filling window 500, the internal space 400 is filled with the adhesive.

Furthermore, the body of the ferrule 10 may be appropriately marked with a product manufacturer's name or a model number, eject pin marks from the time of manufacture, or the like.

In the description of the present specification, a direction connecting the connection end surface 11a and the rear end surface 11b (left-right direction in Figure 3(a)) may be referred to as a connection direction or a front-back direction, a left-right direction in Figure 3(e) as a width direction, and an up-down direction in Figure 3(a) (a direction perpendicular to the connection direction) as the up-down direction.

The ferrule 10 according to the present embodiment is generally stored inside an optical connector 1 as shown in Figure 6, and by connecting two optical connectors 1, the connection end surfaces 11a of the ferrule 10 touch each other to optically connect a plurality of optical fibers.

An external shape of the ferrule 10 according to the present embodiment is the same as that of a ferrule 10 with a shape generally referred to as an MT ferrule. As MT ferrules, those standardized by IEC, JIS, JPCA, and the like are generally widely used. In the present embodiment, as shown in Figure 3, the ferrule 10 with an external shape of a typical twelve-fiber MT ferrule will be described as an example.

Standardized MPO connectors are widely used as optical connectors 1 to connect such MT ferrules. In the present embodiment, as shown in Figure 6, a typical MPO connector will be described as an example.

Note that the present invention is not only applicable to standardized MT ferrules and MPO connectors, but can also be applied to various types of ferrules 10 and optical connectors 1 whose sizes and the like have been modified as necessary according to the purpose of connection, and the like.

When two optical fibers are connected for optical communication, physical contact (PC) connection in which end surfaces of the optical fibers are strongly pressed against each other is generally adopted. This is done by polishing the end surfaces of the optical fibers so that they are curved into a slightly convex shape, and then pressing the convex end surfaces tightly against each other to eliminate air gaps and enable optical communications with low loss. In the case of such a PC connection, since it is necessary to apply a specified pressing force to each optical fiber, the greater the number of optical fibers with respect to a single ferrule 10, the greater the pressing force that must be applied to the MT ferrule by the optical connector 1.

Since Fresnel reflections generated at the connection surface may adversely affect optical communications, the connection end surface 11a of the ferrule 10 may be polished at an angle of about 8° with respect to the connection direction. In this case, the end surface of the optical fiber will be inclined with respect to the direction in which the pressing force is applied (connection direction). Therefore, the pressing force of a connector spring 30 of the optical connector 1 is designed in advance to be larger in anticipation of the case where diagonal polishing is performed.

From this perspective, for example, for connection of a standardized twelve-fiber MT ferrule, the connector spring 30 of the MPO connector is standardized to provide a pressing force of 9.8 N ± 2 N against the MT ferrule. In addition, for connection of a 24-fiber MT ferrule, a pressing force of 20 N ± 2 N is generally applied.

When the optical connector 1 is connected, since two ferrules 10 are precisely positioned by guide pins 50, a pressing force of the connector spring 30 is precisely applied to the connection end surfaces 11a of the ferrules 10. On the other hand, when the optical connector 1 is disconnected, as shown in Figure 6, a convex portion 21 of a connector housing 20 and a flange section 600 of the ferrule 10 engage with each other and prevent the ferrule 10 from slipping forward. In this case, the pressing force of the connector spring 30 is received by the flange section 600 of the ferrule 10, and when the optical connector 1 is disconnected, a large impact stress may be applied to the ferrule 10.

In addition, since the ferrule 10 is extremely precisely designed but the connector housing 20 is not so precisely designed, when the optical connector 1 is being disconnected, the ferrule 10 may be subjected to deformation stress due to a large pressing force being applied to a part of the flange section 600.

Furthermore, optical communication has come to be used in various information processing devices, and optical connectors 1 have been detached and reattached more frequently in recent years. As a result, a large mechanical load is applied to the ferrule 10 each time it is detached or reattached, resulting in occurrences of a problem in that the ferrule 10 breaks inside the optical connector 1.

In addition to the above, the ferrule 10 is incorporated into the optical connector 1 after the optical fiber is fixed and the connection end surface 11a is optically polished. In polishing the connection end surface 11a, the flange section 600 of the ferrule 10 is fixed using a jig and pressed onto a polishing table that operates at high speed. At this point, depending on the method of fixing the jig or the method of polishing the connection end surface 11a (for example, diagonal polishing), a large load may be applied to the flange section 600 fixed to the jig. Thus, when polishing the connection end surface 11a of the ferrule 10, a load may also be applied near the flange section 600 of the ferrule 10, causing damage.

### (Ferrule 10)

As shown in Figures 1 to 4, the ferrule 10 according to the present embodiment is similar to a standardized twelve-fiber MT ferrule in terms of an external shape.

In other words, a total length of the MT ferrule body in the connection direction is 8.0 mm, a lateral width including the flange section 600 is 7.0 mm, a longitudinal width including the flange section 600 is 3.0 mm, a lateral width of the body excluding the flange section 600 is 6.4 mm, and a longitudinal length of the body excluding the flange section 600 is 2.5 mm. In addition, a protruding height of the flange section 600 is 0.25 mm in the entire circumference, and a length L in the connection direction is 2.0 mm.

Furthermore, while the number of fibers, a cladding diameter, a pitch, and the like are to be selected as appropriate for the purpose of connection, in the case of the present embodiment, the diameter of the fiber hole 100 is 125 µm and its pitch is 125 µm. In addition, a diameter of the guide holes 200 is 0.7 mm and their pitch is 4.6 mm. Furthermore, an opening of the adhesive filling window 500 is 2.4 mm in the connection direction and 3.0 mm in a lateral width direction. Although the example shows that the flange section 600 is provided from the rear end surface 11b of the MT ferrule over the entire circumference (left and right side surfaces and upper and lower side surfaces), alternatively, the flange section 600 may be provided on a part of the side surfaces.

The ferrule 10 according to the present embodiment is constituted of, for example, a molded resin material filled with an inorganic filler. Resin materials include thermosetting epoxy resins and polyphenylene sulfide (PPS). Of these, polyphenylene sulfide (PPS) resin is preferably used in terms of positional accuracy, dimensional accuracy, mold shrinkage, and thermal stability. This allows the ferrule 10 to have low connection loss even with compact and high-density mounting. In addition, for example, granular silica can be used as the inorganic filler.

Although inorganic fillers can improve the strength of the ferrule 10, since the sizes of the internal space 400 and the boot insertion hole 300 tend to increase when higher density is required as in recent years and the number of impacts that the ferrule 10 is subjected to increases as the frequency of detachment and reattachment of the optical connector 1 increases, the problem of cracking becomes more pronounced.

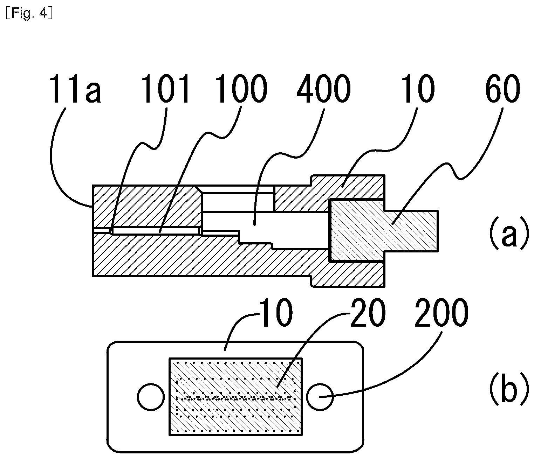

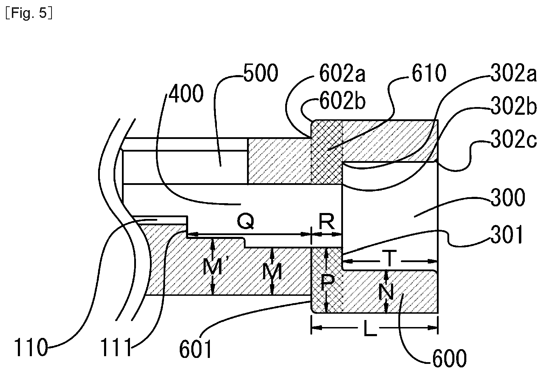

As shown in Figure 4, a boot 60 for holding and protecting an optical fiber is inserted into a normal MT ferrule. As shown in Figure 5, the ferrule 10 according to the present embodiment is designed so that a depth T (depth in the connection direction) of the boot insertion hole 300 is shorter than a length L in the connection direction of the flange section 600.

The depth T of the boot insertion hole 300 is preferably 0.1 mm or more shorter than the length L of the flange section 600, more preferably 0.2 mm or more shorter, and even more preferably 0.4 mm or more shorter. This allows the reinforcing portion 610 to be described later to be secured and sufficient strength to be obtained. In addition, the depth T of the boot insertion hole 300 is preferably 1/2 or more of the length L in the connection direction of the flange section 600. This ensures that the boot 60 is securely held in the boot insertion hole 300.

The depth T of the boot insertion hole 300 according to the present embodiment is preferably 1.9 mm or less, more preferably 1.8 mm or less, and even more preferably 1.6 mm or less. Furthermore, the depth T of the boot insertion hole 300 is preferably 1.0 mm or more. This allows the boot 60 to be held securely while maintaining strength.

Since the ferrule 10 according to the present embodiment is designed so that the depth T of the boot insertion hole 300 is shorter than the length L of the flange section 600, the reinforcing portion 610 which serves as a wall that defines the internal space 400 is provided between a deepest portion 301 of the boot insertion hole 300 (bottom surface of the boot insertion hole 300) and a front end portion 601 of the flange section 600 (side surface in the connection direction).

As shown in Figure 5, the reinforcing portion 610 is a wall of the body of the ferrule 10 that surrounds the internal space 400 and is also part of the flange section 600. The reinforcing portion 610 has a wall thickness P of preferably 0.8 mm or more in a sectional view in the connection direction, more preferably 0.9 mm or more, and even more preferably 0.95 mm or more. In addition, a length R in the connection direction of the reinforcing portion 610 is preferably 0.1 mm or more, more preferably 0.2 mm or more, and even more preferably 0.4 mm or more.

Furthermore, the wall thickness P of the reinforcing portion 610 is preferably between 1.5 and 2.5 times the length R in the connection direction, more preferably between 1.7 and 2.3 times, and even more preferably between 1.8 and 2.2 times.

Accordingly, sufficient strength can be obtained.

As shown in Figure 5, in the ferrule 10 according to the present embodiment, a wall portion on the front side of the front end surface of the flange section 600 (a thinnest portion of the bottom surface defining the internal space 400) of the wall defining the internal space 400 excluding the reinforcing portion 610 has a predetermined wall thickness M.

The wall thickness M of the wall on the front side of the front end surface of the flange section 600 is preferably 0.5 mm or more, more preferably 0.6 mm or more, and even more preferably 0.7 mm or more.

In addition, the wall thickness M of the wall on the front side of the front end surface of the flange section 600 is preferably between 0.8 and 1.5 times the wall thickness N of the boot insertion hole 300, more preferably between 0.9 and 0.3 times, and even more preferably between 0.95 and 0.2 times.

The wall of the internal space 400 is formed so as to cover a perimeter of the internal space 400, and the wall thickness M on the upper surface of the body of the ferrule 10 (a surface that constitutes a frame of the adhesive filling window 500) is preferably similar to the thickness described above.

A distance Q between the rear end portion 111 of the guiding grooves 110 and the front end portion 601 of the flange section 600 is preferably between 0.6 mm and 2.4 mm and more preferably between 1.5 mm and 2.0 mm. Accordingly, since sufficient internal space with the wall thickness M can be secured, the ferrule 10 with high-density connections and high-strength can be realized.

As illustrated in Figures 2 and 5, the ferrule 10 according to the present embodiment is constituted of two levels of bottom surfaces of the wall defining the internal space 400: a bottom surface M' on the side of the guiding grooves 110 where the wall thickness is thicker; and a bottom surface M on the front end surface side of the flange section 600 where the wall thickness is thinner. This reduces the load on the mold during injection molding even when the predetermined distance Q is secured. Therefore, the ferrule has excellent mass productivity and is resistant to breakage even when subjected to repeated stress.

In addition, since the presence of the predetermined level difference between the bottom surface of the guiding grooves 110 and the bottom surface M' of the wall defining the internal space 400 enables a thickness of the coating of the optical fiber tape to be absorbed, a core wire of the optical fiber can be more readily held in a straight line.

The ferrule 10 according to the present embodiment can form a curvature in corner edge portions selected from the group consisting of corner edge portions 302a and 302b of an inner wall of the boot insertion hole 300 and the corner edge portions 602a and 602b of an outer surface of the flange section 600.

As shown in Figure 5, the corner edge portion 302a is a corner portion formed between a wall in an insertion direction of the boot 60 of the boot insertion hole 300 and the deepest portion 301 and is constituted of two circumferential sides in the width direction and two circumferential sides in the longitudinal direction. The corner edge portion 302b is a boundary portion between the internal space 400 and the boot insertion hole 300 and is constituted of two circumferential sides in the width direction and two circumferential sides in the longitudinal direction. In addition, the corner edge portions 602a are corners of two surfaces formed on a side of the front end portion 601 of the flange section 600 and are constituted of two circumferential sides in the width direction and two circumferential sides in the longitudinal direction. The corner edge portion 602b is a corner formed between the front side surface of the flange section 600 and the outer surface of the wall that defines the internal space 400 and is constituted of two circumferential sides in the width direction and two circumferential sides in the longitudinal direction.

In this case, the curvature of the corner edge portions 302a, 302b, 602a, and 602b is preferably between 0.05 mm and 0.5 mm in radius of curvature and more preferably between 0.08 mm and 0.2 mm.

Since this allows stress that tends to concentrate on the corner edge portions 302a, 302b, 602a, and 602b to be alleviated even when a pressing force is applied to the flange section 600 when the optical connector 1 is detached and reattached, occurrences of cracks can be prevented.

The example in Figure 5 shows an example where the curvature is formed only on the corner edge portions 302a and 602b. This minimizes the effect on positioning when polishing the connection end surfaces. Not limited to this, a curvature may be formed at least on the corner edge portion 302a and the corner edge portion 602a.

### (Optical Connector 1)

Figure 6 is a schematic perspective view for describing an internal structure of the optical connector 1 according to the present embodiment and is a diagram in which 1/4 of the connector housing 20 has been removed to make the internal structure visible.

The optical connector 1 is covered by the connector housing 20 and configured such that internal components can be removed from the rear of the connector housing 20 when necessary. The ferrule 10 is inserted and incorporated to a side closest to the connection surface side (tip) of the optical connector 1 and the ferrule 10 is configured to be engageable with the convex portion 21 of the connector housing 20. When the optical connector 1 is connected to another optical connector 1, the ferrule 10 is moved backward due to the connection end surface 11a coming into contact with the ferrule 10, but when the optical connector 1 is disconnected, the ferrule 10 is configured to engage with the convex portion 21 of the connector housing 20 so that the ferrule 10 does not slip forward from the optical connector 1.

In addition, a pin holder 40 is arranged behind the ferrule 10. The pin holder 40 holds a pair of guide pins 50 which penetrate the guide holes 200 in the ferrule 10 and project to the connection surface side of the optical connector 1. While the optical connector 1 (also called the male or plug side) including the guide pins 50 is shown in Figure 6, in this case, another optical connector 1 (also called the female or receptacle side) to be connected usually does not include the guide pins 50.

The connector spring 30 is arranged behind the pin holder 40. The connector spring 30 exerts a pressing force against the ferrule 10 by means of a strong spring force. In this case, the optical fiber extending from the ferrule 10 penetrates the interior of the pin holder 40 and connector spring 30 and extends outward from the rear of the optical connector 1.

While the internal structure of an MPO connector is shown as an example in Figure 6, other connectors such as an MTP connector (registered trademark), an SN connector (registered trademark), and an MMCC connector (registered trademark) may be used as appropriate for the purpose of optical connection.

In addition, the boot 60 inserted into the ferrule 10 can also be appropriately designed according to the type of optical connector 1, the optical fiber routing method, the purpose of optical connection, and the like.

### (Ferrule 10 According to Second Embodiment)

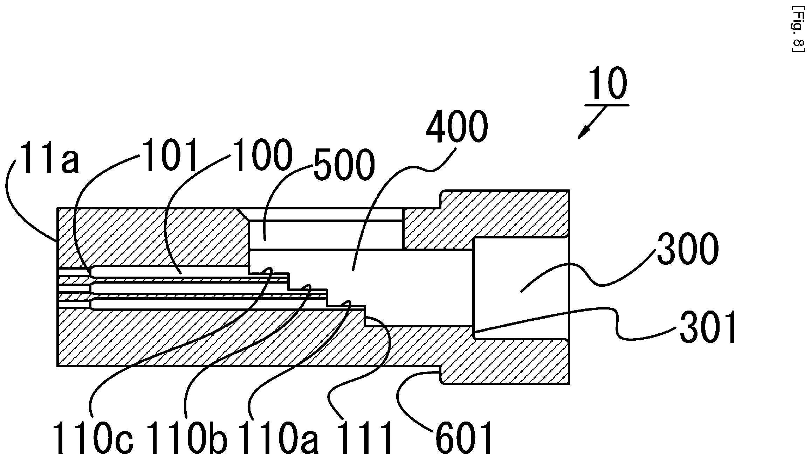

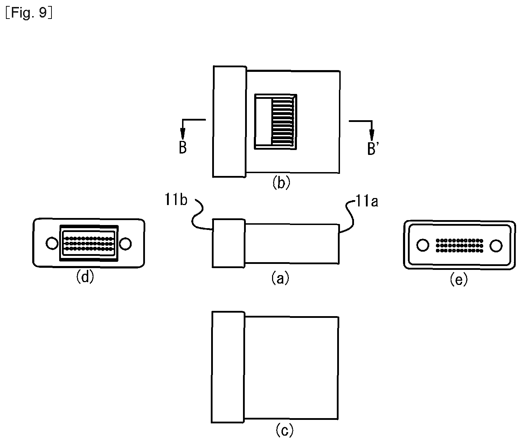

Figure 8 is a schematic sectional view of the ferrule 10 according to a second embodiment which is a sectional view taken along line B-B' in Figure 9(b). Figure 9(a) is a schematic front view, Figure 9(b) is a schematic top view, Figure 9(d) is a schematic left side view as viewed from a left side, Figure 9(c) is a schematic bottom view, and Figure 9(e) is a schematic right side view as viewed from a right side of the ferrule 10 according to the second embodiment.

The ferrule 10 according to the second embodiment is an example of a 36-fiber MT ferrule, with fiber holes 100 for 12 fibers per horizontal row being arranged over three columns. This allows three times as much information to be communicated compared to the ferrule 10 according to the first embodiment.

On the other hand, in the case of the present embodiment, since three columns of fiber holes 100 are arranged in the up-down direction, as shown in Figure 8, the guiding grooves 110 for inserting optical fibers are arranged over three levels. In addition, the opening of the adhesive filling window 500 must be large enough to ensure that the optical fiber can be inserted into each fiber hole 100. In order to PC-connect a 36-fiber MT ferrule, the pressing force of the connector spring 30 is required to be 20 N ± 2 N, which means that a very large force is to be applied to the MT ferrule.

Thus, when optical fibers are densified, since the openings of the internal space 400, the boot insertion hole 300, and the adhesive filling window 500 become larger than before and since a larger pressing force is applied to the ferrule 10, the problem of damage caused by detaching and reattaching the optical connector 1 becomes more pronounced.

Note that in this case, a rear end portion 111 of the guiding grooves 110 refers to an end portion of the guiding grooves 110a on the side of the rear end surface 11b.

### (Ferrule 10 According to Third Embodiment)

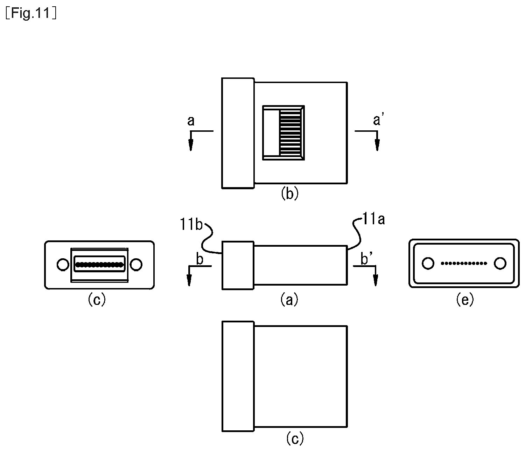

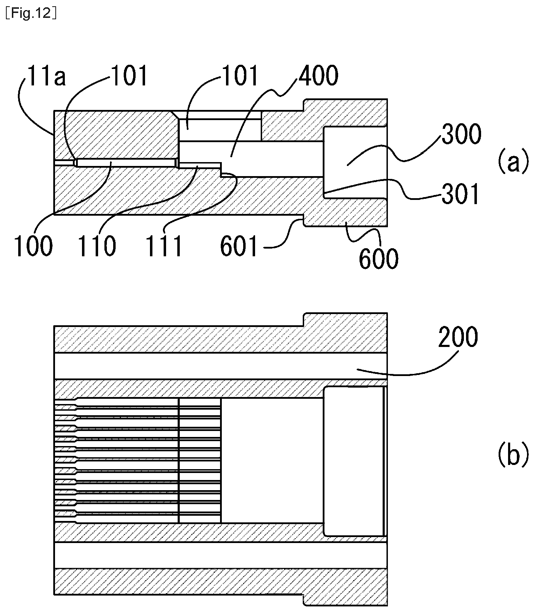

Figure 11(a) is a schematic front view, Figure 11(b) is a schematic top view, Figure 11(d) is a schematic left side view as viewed from a left side, Figure 11(c) is a schematic bottom view, and Figure 11(e) is a schematic right side view as viewed from a right side of the ferrule 10 according to the third embodiment. In addition, Figure 12 is a schematic sectional view of the ferrule 10 according to the third embodiment in which Figure 12(a) is a sectional view taken along line a-a' in Figure 11(b) and Figure 12(b) is a sectional view taken along line b-b' in Figure 11(b).

As shown in Figure 12(a), the ferrule 10 according to the third embodiment is configured so that a bottom surface of the wall defining the internal space 400 is flat and the wall thickness M' and the wall thickness M are the same wall thickness.

In other words, as shown in Figures 2 and 5, in the ferrule 10 according to the first embodiment, the bottom surface of the wall defining the internal space 400 was configured in two levels: a thicker wall thickness M' on the side of the guiding grooves 110 and a thinner wall thickness M on the front end surface side of the flange section 600. On the other hand, the ferrule 10 according to the third embodiment does not have a level difference and is flat at the bottom surface of the wall defining the internal space 400 between the rear end portion 111 of the guiding grooves 110 and the front end portion 601 of the flange section 600.

This allows the wall thickness M on the flange section side of the internal space to be thicker, thereby increasing strength.

### (Example and Comparative Example of Ferrule 10)

Hereinafter, an example and a comparative example of the ferrule 10 will be described.

### [Example 1]

The ferrule 10 according to the second embodiment shown in Figures 8 and 9 was used as Example 1.

In other words, the ferrule 10 was a 36-quartz fiber ferrule with a cladding diameter of ϕ125 µm, and the external shape (total length, lateral width, longitudinal width, size of the flange section and other parts) of the body of the ferrule 10 was the same as in the first embodiment. In addition, the fiber hole 100 had a diameter of 125 µm, a horizontal pitch of 125 µm, and a vertical pitch of 0.25 mm, and the guide hole 200 had a diameter of 0.7 mm and a pitch of 4.6 mm. The opening of the adhesive filling window 500 was 2.4 mm in the connection direction and 3.0 mm in the width direction.

The boot insertion hole 300 had a depth T of 1.5 mm, an opening of 3.6 mm in the lateral width direction, and an opening of 1.6 mm in the longitudinal width direction. The size of the internal space 400 was 3.24 mm in the lateral width direction, 1.2 mm in the longitudinal width direction, and 1.2 mm in the connection direction. The width of the guiding grooves 110a, 110b, and 110c in the connection direction was 0.6 mm each, for a total of 1.8 mm provided.

The flange section 600 had a length L of 2 mm, a protruding height of 0.25 mm in the entire circumference, and a wall thickness N of 0.65 mm for the boot insertion hole 300. The reinforcing portion 610 had a wall thickness P of 1.0 mm and a length R in the connection direction of 0.5 mm. The wall defining the internal space 400 excluding the reinforcing portion 610 had a wall thickness M of 0.75 mm, and the distance Q between the rear end portion 111 and the front end portion 601 was 1.8 mm.

Furthermore, a curvature with a radius of curvature of 0.1 mm was formed on the corner edge portion 302a of the inner wall of the boot insertion hole 300 and on the corner edge portion 602b of the outer surface of the flange section 600.

In the present example, polyphenylene sulfide resin and silica particles surface-treated with a silane coupling agent were melted and mixed using a twin-screw extruder, and the ferrule 10 with the shape described above was molded by injection molding.

36 quartz optical fibers ϕ125µm were inserted into the resulting 36-fiber ferrule 10, fixed with epoxy resin, the connection end surface 11a was polished at an angle of 8°, incorporated into an MTP connector (manufactured by US Conec Ltd.), and a 20N pressing force was applied by the connector spring 30.

Then, a detachment/reattachment test (Telcrdia-GR-1435-CORE, JIS C61300-2-2) was conducted 500 times per connector.

Furthermore, the above detachment/reattachment test was conducted 16 times to examine the state of breakage of each ferrule 10.

As a result, none of the ferrules 10 in the example had cracks.

### [Comparative Example 1]

The detachment/reattachment test was conducted in the same manner as in Example 1 with the exception of using a standardized, general-purpose 36-fiber ferrule 10 (36MT-PA-S, manufactured by Hakusan Inc.).

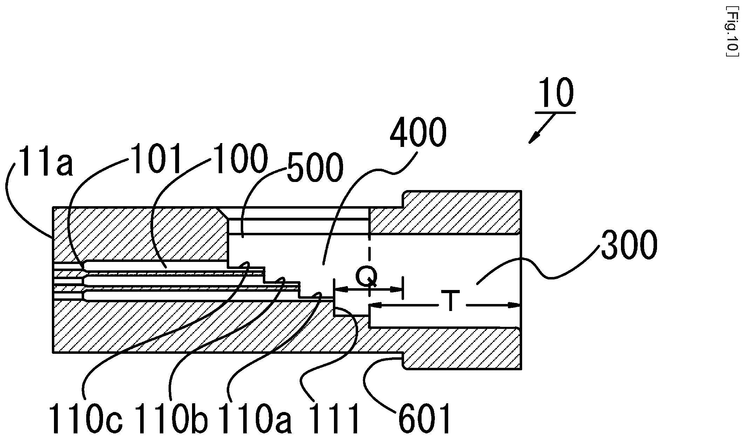

A schematic cross-sectional view of the ferrule 10 used in Comparative Example 1 is shown in Figure 10. The 36-fiber ferrule 10 used in Comparative Example 1 differs from Example 1 in the following points, and the ferrule 10 is otherwise the same as in Example 1.

Namely, the boot insertion hole 300 had a depth T of 3 mm, an opening of 3.6 mm in the lateral width direction, and an opening of 1.7 mm in the longitudinal width direction. The size of the internal space 400 was 3.24 mm in the lateral width direction, 1.2 mm in the longitudinal width direction, and 3.5 mm in the connection direction.

The length L was set to 2.0 mm and protruding height of the flange section 600 was set to 0.25 mm in the entire circumference, and the wall thickness N of the boot insertion hole 300 was set to 0.65. The wall defining the internal space 400 had a wall thickness M of 0.65 mm.

No curvature was formed on the corner edge portion 302a of the inner wall of the boot insertion hole 300.

As a result of performing the same detachment/reattachment test as in Example 1 on the ferrule 10 according to Comparative Example 1 obtained in this way, five of the 16 optical connectors 1 had breakage of the ferrule 10 (three breakages on the female side and two on the male side).

Figure 7 shows photographs of the damaged ferrules 10 after the detachment/reattachment test, in which Figure 7(a) shows a photograph of the damaged ferrule 10 on the female side, and Figure 7(b) shows a photograph of the damaged ferrule 10 on the male side. In both cases, it was confirmed that the ferrule 10 had cracked from the flange section 600 of the ferrule 10 to the boot insertion hole 300, leading to breakage.

On the other hand, it was confirmed that the ferrule 10 of Example 1 is less likely to crack and break even when the optical connector 1 is repeatedly detached and reattached due to the wall thickness being sufficiently secured between the flange section 600 and the boot insertion hole 300.

In the present invention, the ferrule 10 corresponds to the "ferrule", the connection end surface 11a corresponds to the "connection end surface", the fiber hole 100 corresponds to the "fiber hole", the boot 60 corresponds to the "boot", the boot insertion hole 300 corresponds to the "boot insertion hole", the internal space 400 corresponds to the "internal space", the rear end surface 11b corresponds to the "rear end surface", the flange section 600 corresponds to the "flange section", the deepest portion 301 corresponds to the "deepest portion", the reinforcing portion 610 corresponds to the "reinforcing portion", the guiding grooves 110, 110a, 110b, 110c correspond to the "guiding grooves", the corner edge portions 302a, 302b, 602a, 602b correspond to the "corner edge portions", the guide hole 200 corresponds to the "guide pin hole", and the optical connector 1 corresponds to the "optical connector".

While preferable embodiments of the present invention are as described above, the present invention is not limited thereto. It should be understood that various other embodiments may be made without deviating from the spirit and the scope of the present invention. Furthermore, while operations and effects due to the configuration of the present invention have been described in the present embodiment, the operations and effects are merely examples and are not intended to limit the present invention.

### Reference Signs List

1 optical connector
10 ferrule
11a connection end surface
11b rear end surface
20 connector housing
30 connector spring
50 guide pin
60 boot
100 fiber hole
110, 110a, 110b, 110c guiding groove
200 guide pin hole
300 boot insertion hole
301 deepest portion
302a, 302b corner edge portion
400 internal space
600 flange section
610 reinforcing portion
602a, 602b corner edge portion

## Claims

1. A ferrule for connecting a plurality of optical fibers, the ferrule including:
fiber holes, each of which is provided on a connection end surface for inserting an optical fiber;
a boot insertion hole which is provided on a rear end surface for inserting a boot into which a plurality of optical fibers can be inserted;
an internal space which provides communication between a plurality of the fiber holes and the boot insertion hole; and
a flange section which is provided on the rear end surface side and protrudes from a surface adjacent to the rear end surface, wherein
a depth T of the boot insertion hole is shorter than a length L of the flange section in a connection direction.

2. The ferrule according to claim 1, wherein a reinforcing portion is provided between a deepest portion of the boot insertion hole and a front end portion of the flange section.

3. The ferrule according to claim 1, wherein
the flange section is formed so as to cover a perimeter of the boot insertion hole,
guiding grooves for guiding the optical fibers are formed on the rear end surface side of the fiber holes, and
a bottom surface of a wall that defines the internal space has a step between the rear end portion of the guiding grooves and the front end portion of the flange section.

4. The ferrule according to claim 1, wherein a wall thickness M of the internal space on the side of the front end surface of the flange section is 0.8 times or more to 1.5 times or less of a wall thickness N of the boot insertion hole.

5. The ferrule according to claim 1, wherein corner edge portions of an inner wall forming the boot insertion hole and/or corner edge portions of an outer wall forming the flange section is provided with a curvature.

6. The ferrule according to claim 1, further comprising a pair of guide pin holes for inserting a pair of guide pins, wherein
a distance between the guide pin holes and the boot insertion hole is 0.1 mm or more to 0.2 mm or less.

7. An optical connector in which the ferrule according to any one of claims 1 to 6 has been incorporated.

8. A method for manufacturing an optical connector in which the ferrule according to any one of claims 1 to 6 has been incorporated, comprising the steps of:
inserting each of a plurality of the optical fibers into the optical fiber insertion hole;
inserting a boot for the optical fibers into the boot insertion hole; and
assembling the ferrule into a connector housing.
